# EUROPEAN PATENT SPECIFICATION

(11) **EP 2 098 816 B1**
(45) Date of publication and mention of the grant of the patent: **21.06.2017**
(21) Application number: 08152208.8
(22) Date of filing: 03.03.2008
(51) Int. Cl.: G01B 3/02, G01B 3/06

(54) **Folding rule with protective end cap**
Zollstock mit schützender Endkappe
Règle pliable doté d'un capuchon d'extrémité protecteur

(43) Date of publication of application: 09.09.2009
(73) Proprietor: Hultafors Group AB, 517 21 Bollebygd (SE)
(72) Inventor: Gustafsson, Dan, 517 00 BOLLEBYGD (SE); Inghammar, Pär, 504 95 BORÅS (SE); Hedelin, Joakim, 426 69 VÄSTRA FRÖLUNDA (SE); Persson, Per, 435 43 PIXBO (SE)
(74) Representative: Awapatent AB

(56) References cited:
- GB-A- 375 501
- GB-A- 624 188
- US-A- 650 879
- US-A- 1 418 358
- US-A- 5 035 054
- US-A- 5 497 906
- US-A1- 2005 103 792

## Description

### Field of the invention

The present invention relates to a folding rule with a protective end cap.

### Background of the invention

As is well known, folding rules usually comprises several members linked together to constitute a foldable measuring device. Each folding rule member is, at each of its two end portions, linked to another folding rule member, except for the end members of the folding rule, which have one free end portion each. When the folding rule is unfolded and in use the free end portions are exposed to damage and wearing due to their unprotected position. However, it is important to maintain the free end portions in good condition since defect ends might cause measuring faults.

GB375501 describes a carpenter's rule having a metal socket or shoe which fits the end of the rule. The shoe is fixed to the rule by rivets or by spikes entering the material of the rule.

For folding rules made of plastic, other solutions are required, since metal spikes are not easily entered into the plastic folding rule members. To this end, EP0641991 discloses a plastic folding rule with a protective piece attached to an end member of the folding rule. The free end part of the end member of the folding rule has a cutout that extends from the end face of the end part into the interior of the end member. The protective piece is T-shaped and comprises a beam and a shaft. The beam rests on the end face of the end member and the shaft is sunk into the cutout of the end member. The shaft has fastening hooks that engage with the walls of the cutout in the interior of the end member.

However, a problem with the solution disclosed in EP0641991 is that it is very difficult to provide the hooks or other holding means inside the end member. Also, welding may have to be used to secure the end piece, which complicates the assembly.

Further, since a folding rule is a measuring device and the end protection is located right at the measurement start point, it is essential that the end protection is fastened in an accurate way so that it does not imply error in the measurement. This requires a high precision of the end protection.

### Summary of the invention

It is therefore an object of the present invention to at least partly overcome the above mentioned drawbacks and to provide an improved folding rule with end protection, which in particular is easy to manufacture.

These and other objects that will be apparent from the following description are achieved by a folding rule in accordance with claim 1. Preferred embodiments of the present invention are presented in the dependent claims.

According to a first aspect of the present invention, there is provided a folding rule comprising an end member with a first end portion and a second end portion opposite the first end portion, wherein the end member is made of plastic, wherein the first end portion is linked to another member of the folding rule and the second end portion is provided with a protective end cap, wherein the protective end cap includes a protrusion in snap-fit engagement with a corresponding engagement portion of a first outer surface of the end member so as to prevent the protective end cap from sliding off the end member.

By using a protective end cap, which preferably is arranged over and protectively covers at least part of the second end portion of the end member, no extensive cutout has to be provided in the end member to accommodate the protective end element, which for instance is advantageous from a strength point of view. Further, the snap-fit engagement allows for easy mounting and locking of the protective end cap on the end member. Also, the protective end cap of the present folding rule may be substantially self adjusting, whereby the protective end cap automatically assumes the correct position during assembly, even though the protective end cap and the corresponding engagement portion are not completely matched, which advantageously facilitates mounting and locking of the protective end cap to the end member of the folding rule.

Preferably, the protective end cap is substantially U- or C-shaped, having a first portion and a second portion, which portions are arranged essentially parallel in relation to each other and joined by a third portion of the protective end cap, wherein the first portion is arranged to abut against the first outer surface of the end member and is provided with the protrusion, the second portion is arranged to abut against a second outer surface at the opposite side of the end member compared to said first outer surface, and the third portion is arranged to cover the free end face of the end member. Such a protective end cap may easily be manufactured by bending a blank into the appropriate shape.

Preferably, the engagement portion is a recess on the first outer surface. Such a recess may easily be pre-made in an end member made of hard material such as plastic.

In one embodiment, the third portion of the protective end cap is arranged to abut the free end face of the end member, in which case the third portion resting on the free end face of the end member prevents the protective end cap from sliding further onto the end member of the folding rule, while the protrusion in snap-fit engagement with the corresponding engagement portion or recess in the end member prevents the protective end cap from sliding off the end member. Hence, the protrusion-recess and third portion-free end face are counteracting.

In another embodiment, each of said first outer surface and said second outer surface of the end member is provided with a lower portion for accommodating the first and second portions of the protective end cap, respectively, such that a gap between the free end face of the end member and the third portion of the protective end cap is defined. If there is no such defined gap, e.g. in case the third portion of the protective end cap is arranged to abut the free end face of the end member, any material left on the end face of the end member during manufacturing would give a non-defined gap between the end member and the protective end cap, which would result in an error in the measurement. By providing the defined gap, this problem is beneficially alleviated.

Preferably, the protrusion is resiliently arranged in relation to the rest of the protective end cap, preferably so as to project into the recess in a default state and be less or not protruding from the rest of the end cap in a temporary state, the default state being the condition the protrusion assumes when it is not otherwise affected or actuated. That is, during mounting of the protective end cap onto the end member, the protrusion itself may temporarily be lifted in relation to the rest of the protective end cap to slide over the end member until it snap-fits into the recess assuming its default state. In fact, the complete protective end cap, in particular the interface between the above mentioned first and third portions and the interface between the second and third portions, may be flexible (or semi-flexible or at least not completely rigid) to facilitate mounting of the protective end cap onto the end member.

Also preferably, the protrusion is provided by an inwardly bent tab formed by a cut in the protective end cap. 'Inwardly' means here towards the end member or towards the centre of the protective end cap. Hence, the protrusion is integrally formed with the end cap, and such a protrusion may easily be manufactured by a cut or punch and bend operation. Further, no non-integral protrusion has to be assembled, and consumption of material is minimized.

Also preferably, the protrusion has a sloping surface, such that the protrusion easily may be deflected by the free end face of the end portion, in order to facilitate the application of the protective end cap onto the end portion of the end member. Alternatively, or as a complement, the end second end portion provided with the protective end cap has chamfered edges. The end member is made of plastic, for instance fibreglass-reinforced polyamide (similar members of the folding rule could be also made of plastic). Also preferably, the protective end cap is made of metal, a preferred metal being steel, which for instance gives high resistance to wearing and is easy to machine to the desired shape and design of the present invention.

Also preferably, the protective end cap includes a second protrusion in snap-fit engagement with a corresponding second engagement portion of a second outer surface at the opposite side of the end member compared to said first outer surface, in order to further ensure that the protective end cap is securely mounted to the end member of the folding rule.

### Brief description of the drawings

These and other aspects of the present invention will now be described in more detail, with reference to the appended drawings showing currently preferred embodiments of the invention.
Figure 1 is a perspective view of a folding rule according to an embodiment of the present invention.
Figure 2 is an exploded, perspective view of an end portion of an end member and a protective end cap of the folding rule shown in figure 1.
Figures 3a - 3c are perspective views and cross-sectional views showing different stages of applying a protective end cap to an end member of a folding rule according to an embodiment of the invention.
Figure 3d is a cross-sectional view showing a stage of applying a protective end cap to an end member of a folding rule according to an embodiment of the invention.

### Detailed description

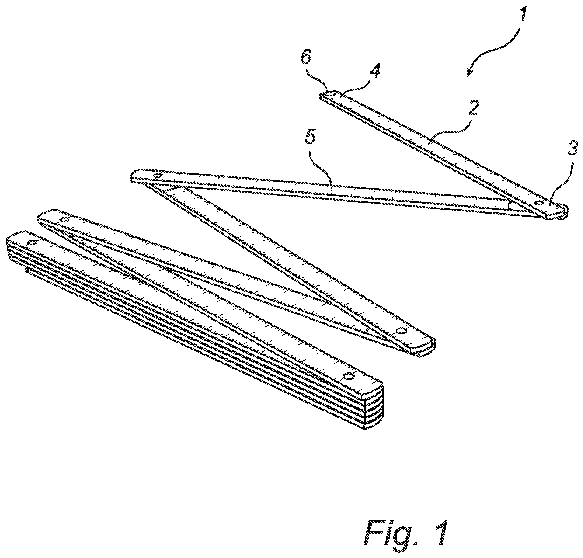

Figure 1 shows a folding rule 1 which is partly folded and partly unfolded. The folding rule 1 comprises several folding rule members, for instance a member 5 and an end member 2. The end member 2 has two opposite end portions 3; 4, wherein the first end portion 3 of the end portions is linked to the member 5 and the second, "free" end portion 4 is provided with a protective end cap 6.

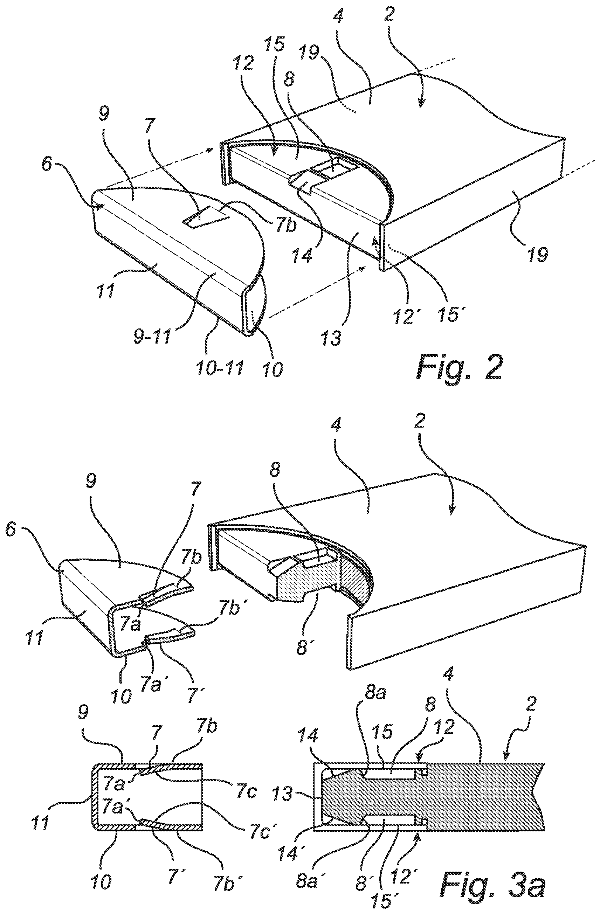

The present folding rule 1 is generally operated as a conventional folding rule or carpenter's measure in order to measure lengths. To this end, the folding rule members, including member 5 and end member 2, are preferably provided with at least one length scale. Further, the present folding rule 1 preferably have a total length of 2 meters when it is completely unfolded. Further, the present folding rule 1 is preferably made of plastic, for instance fibreglass-reinforced polyamide, even though other suitable materials could be used, as long as the end member is made of plastic. Figure 2 is an exploded, perspective close up view of the end portion 4 of the end member 2 and the protective end cap 6, with the protective end cap 6 shown removed from the end portion 4 for illustrative purposes. Generally, the protective end cap 6 is an end element or socket adapted to be provided over and protectively cover at least a part of the end portion 4, to protect the end portion against wear and keep it in good condition since defect ends might cause measuring faults. In a preferred embodiment, the protective end cap 6 is essentially U-shaped, having a first portion 9 and a second portion 10, which portions are arranged essentially parallel in relation to each other and joined by a third portion 11 of the protective end cap 6. The free edges of the first and second potions 9 and 10 may be curved, as illustrated.

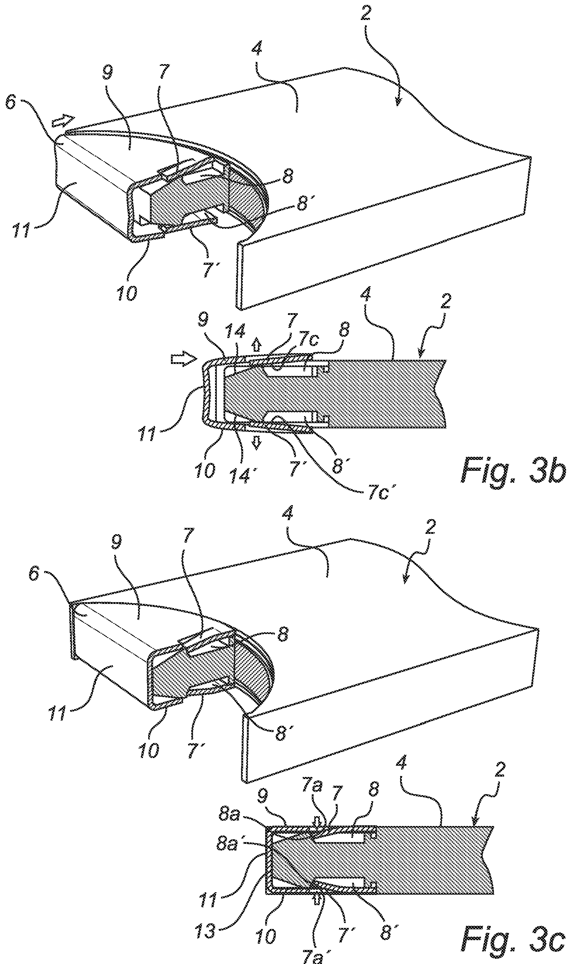

The first portion 9 is further provided with a protrusion 7, namely a tab formed by a centrally placed essentially U-shaped through-cut or -notch in the first portion 9 of the protective end cap 6, which tab or protrusion 7 is bent at fold 7b so as to project inwardly towards the end member 2 or towards the centre of the protective end cap 6 in a default state, as illustrated. Further, the protrusion 7 has a free distal end 7a (see figures 3a-3c) opposite the fold at 7b, and a surface 7c which is sloping in the default state, as illustrated. In other words, the end 7a projects out a distance from the main portion or level of portion 9, while the fold 7b lies flush with the main portion or level of portion 9. The fold 7b is preferably flexible, so that the protrusion for the moment may be brought essentially in level with the first portion 9 in a temporary state. In fact, the complete protective end cap 6, in particular the interface 9-11 between the first portion 9 and the third portion 11 and the interface 10-11 between the second portion 10 and the third portion 11, may be flexible to facilitate mounting of the protective end cap 6 (see figure 3b).

The above mentioned flexibility may be achieved by suitable selecting the material and dimensions of the protective end cap 6. The present protective end cap 6 is preferably made of steel.

The illustrated protrusion 7 may for instance be manufactured by a cut or punch operation and a subsequent or combined bend operation starting from a blank. The overall U-shape of the protective end cap 6 is achieved by appropriately bending the blank after or before the above mentioned cut/punch and bend operation.

The end member 2 of the folding rule 1, which end member 2 has an elongated shape with a rectangular cross-section, comprises: a first outer surface 12 and a second opposite outer surface 12', said outer surfaces being the broad sides of the end member; two narrow sides or long edges 19; and a free (short) end face 13, as illustrated. Further, an engagement portion in the form of a box-shaped recess 8 is provided in the first outer surface 12, which recess 8 is centrally placed widthwise, and placed some distance from the free end face 13 lengthwise. The recess 8 is preferably formed when the end member 2 is moulded, for low cost and good precision. Alternatively, the recess 8 could be milled in the end member 2. Further, edge 14 of the end member 2 between free end face 13 and first surface 12 may be chamfered, in order to facilitate application of the protective end cap 6. Only a portion of (for example as illustrated) or alternatively the complete edges 14 could be chamfered.

When the protective end cap 6 in an assembled state is mounted to the end portion 4 of the end member 2 (further illustrated in figure 3c), the first portion 9 of the protective end cap 4 abuts against a portion of the first outer surface 12, the second portion 10 abuts against a portion of the second outer surface 12', and the third portion 11 abuts here against the free end surface 13. Hence, the third portion 11 resting on the free end face 13 of the end member 2 prevents the protective end cap 6 from sliding further onto the end member 2 of the folding rule 1. At the same time, the protrusion 7 is in snap-fit engagement with the recess 8. Namely, the free distal end 7a of the protrusion 7 projects into the recess 8 and is in contact with the side wall 8a of the recess 8 closest to the free end face 13 (and optionally with the floor of the recess 8), preventing the protective end cap 6 from sliding off the end member 2, to the left in fig 2. Preferably, the third portion 11 of the protective end cap 4 covers the essentially complete free end face 13 of the end member 2.

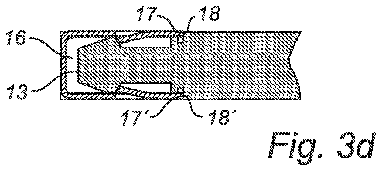

Note that the dimensions and positions of the protrusion 7 and recess 8 should be matched so that the protrusion 7 can fit into the recess 8 in the assembled state, at the same time as the protective end cap 6 is held firmly to the end portion 4, though some mismatch could generally be allowed in the present construction without compromising the functionality, as will be exemplified below. Also note that the protrusion 7 beneficially could prevent sideways or widthwise displacement of the protective end cap 6 in relation to the end member 2, by having the diagonal edges of the tab 7 abutting corresponding side walls of the recess 8. Further, shallow recesses or lower portions 15, 15' may be provided in the outer surfaces 12 and 12' (and optionally in the free end face 13), such that the junction between the protective end cap 6 and the end member 2 becomes smooth, as illustrated e.g. in figure 3c, which beneficially facilitates measurement and prevents the protective end cap 6 from getting stuck in foreign objects. Also, the lower portions 15 and 15' of the outer surfaces 12 and 12' could be adapted to accommodate the portions 9 and 10 such that a small gap 16 is created when edges 17, 17' of the portions 9 and 10 abuts against edges 18, 18' of the lower portions 15, 15' (preventing the end cap 6 to slid further onto the end member 2), as illustrated in figure 3d. The gap 16 may be about 0,1 mm. Such a gap 16 could beneficially reduce the effect of any plastic material left on the end face 13 of the end member 2 during manufacturing, which material otherwise could cause an error in the measurement. Alternatively, to make sure that the end cap 6 can be mounted correctly even though there is some remaining plastic material on the end face 13, some play (e.g. 0,1 mm) could be allowed at the junctions between edges 17-18 and 17'-18'.

In an exemplary embodiment, the protective end cap 6 is about 15 mm wide, and the first and second portions 9, 10 extend about 5 mm from the third portion 11, the latter having a height of about 2 mm. The thickness of the protective end cap 6 is about 0,3-0,4 mm, e.g. to achieve suitable flexibility, and the depth of the recess 8 is about 0,5 mm. The tab 7 and recess 8 could be all right angles (e.g. like a square or rectangle for the tab, or like a cube or rectangular parallelepiped for the recess), but also irregular shapes are envisaged. The recess 8 may for instance have somewhat sloping or diagonal side walls. In the exemplary embodiment, the tab is placed about 2 mm from the third portion 11, the end 7a is about 1 mm, the fold 7b is about 2 mm, and the distance between and 7a and fold 7b is about 2,5 mm.

Figures 3a - 3c are perspective views and cross-sectional views showing different stages of applying a protective end cap 6 to an end member 2 of a folding rule 1 according to a preferred embodiment of the invention. In the embodiment shown in figures 3a - 3c, the folding rule 1 is similar to the folding rule described above in relation with figures 1 and 2, but the second portion 10 of the protective end cap 6 is provided with a second protrusion 7' like the above protrusion 7 for in snap-fit engagement with a corresponding second recess 8' provided in the second outer surface 12' of the end member 2. In this way, the protective end cap 6 is held in place at the end member 2 with two protrusions 7, 7', and two corresponding recesses 8, 8', one at each broad side of the end portion 4.

Figure 3a shows a stage where the protective end cap 6 is completely separated from the free end portion 4 of the end member 2. Here, the protrusions 7, 7' project inwardly in their default states. In figure 3b, the protective end cap 6 has been slid partly onto the end portion 4, and the inwardly projecting protrusions 7, 7' are pressed outwards (illustrated by arrows) as the surfaces 7c, 7c' first engages the chamfered edge 14 and a corresponding chamfered edge 14'. In figure 3b, the protrusions 7, 7' are in a temporary state. Then, when the protective end cap 6 is slid further onto the end member 2 and the ends 7a, 7a' pass the side walls 8a, 8a', each protrusion 7, 7' snap-fits into the corresponding recess 8, 8', hence returning in whole or in part to the default state (illustrated by arrows), such that the protective end cap 6 is held in place at the end portion 4 of the end member 2 and is prevented to slide off the end member 2. Beneficially, no other means for fastening the protective end cap 6, such as glue or rivets or the like, are necessary. Also, it should be noted that the protective end cap 6 will be locked in position as soon as the ends 7a, 7a' passes the top of the side walls 8a, 8a' and the protrusions 7, 7' starts returning towards the default state. On the other hand, the protective end cap 6 could be pressed further onto the end member 2 while still firmly being prevented to slide off the end member 2, as the protrusions 7, 7' continues towards the default state and the ends 7a, 7a' maintain the contact with the diagonal side walls 8a, 8a', whereby the protective end cap 6 automatically may assume a correct position when assembled, even though the protective end cap 6 and recess 8 are slightly mismatched or out of tolerance (e.g. should the recess 8 be placed slightly too close to or far away from the free end face 13).

The person skilled in the art realizes that the present invention by no means is limited to the preferred embodiments described above. On the contrary, many modifications and variations are possible within the scope of the appended claims.

For instance, though embodiments with one or two corresponding protrusions and recesses have been shown and described, more than two corresponding protrusions and recesses could be used.

Further, instead of the protrusion being integral or formed in one piece with the protective end cap as tab 7, one or more non-integral protrusions could be fixed to the protective end cap.

Further, in case of a non-resiliently arranged protrusion, flexibility in rest of the end cap, in particular the link(s) between first and third (and/or second and third) portions, could be utilized when applying the protective end cap to the end member. Also, a resilient protrusion and an otherwise rigid end cap is envisaged.

Further, the protective end cap could be adapted to cover more of the end portion of the end member than described above, including parts of the long edges thereof.

Further, the snap lock mechanism(s) (protrusion+recess) could be provided at the long edges of the end member.

Further, also the free end portion of the second end member of the folding rule, or some other end portion of the folding rule, could be provided with an protective end cap as described above.

## Claims

1. A folding rule (1), comprising an end member (2) with a first end portion (3) and a second end portion (4) opposite the first end portion, wherein the end member is made of plastic, wherein the first end portion is linked to another member (5) of the folding rule and the second end portion is provided with a protective end cap (6), wherein the protective end cap includes a protrusion (7) in snap-fit engagement with a corresponding engagement portion (8) of a first outer surface (12) of the end member so as to prevent the protective end cap from sliding off the end member.

2. A folding rule according to claim 1, wherein the protective end cap has a first portion (9) and a second portion (10), which portions are arranged essentially parallel in relation to each other and joined by a third portion (11) of the protective end cap, and wherein the first portion is arranged to abut against said first outer surface of the end member and is provided with the protrusion, the second portion is arranged to abut against a second outer surface at the opposite side of the end member compared to said first outer surface, and the third portion is arranged to cover the free end face (13) of the end member.

3. A folding rule according to claim 1 or 2, wherein the protective end cap is essentially U- or C-shaped.

4. A folding rule according to any preceding claim, wherein the engagement portion is a recess provided on said first outer surface.

5. A folding rule according to claim 2, wherein each of said first outer surface and said second outer surface of the end member is provided with a lower portion (15; 15') for accommodating the first and second portions of the protective end cap, respectively, such that a gap (16) between the free end face of the end member and the third portion of the protective end cap is defined.

6. A folding rule according to any preceding claim, wherein the protrusion is resiliently arranged in relation to the rest of the protective end cap.

7. A folding rule according to any preceding claim, wherein the protrusion is provided by an inwardly bent tab formed by a cut in the protective end cap.

8. A folding rule according to any preceding claim, wherein the protrusion has a sloping surface.

9. A folding rule according to any preceding claim, wherein the second end portion provided with the protective end cap has chamfered edges.

10. A folding rule according to any preceding claim, wherein the protective end cap is made of metal.

11. A folding rule according to any preceding claim, wherein the protective end cap includes a second protrusion (7') in snap-fit engagement with a corresponding second engagement portion (8') of a second outer surface (12') at the opposite side of the end member compared to said first outer surface.

12. A folding rule according to claim 1, wherein the protective end cap is made of steel.

## Patentansprüche

1. Gliedermaßstab (1), der ein Endelement (2) mit einem ersten Endabschnitt (3) und einem zweiten Endabschnitt (4), der dem ersten Endabschnitt gegenüberliegt, umfasst, wobei das Endelement aus Plastik besteht, wobei der erste Endabschnitt an ein weiteres Element (5) des Gliedermaßstabs gebunden ist und der zweite Endabschnitt mit einer schützenden Endkappe (6) bereitgestellt ist, wobei die schützende Endkappe einen Vorsprung (7) in Schnappsitzeingriff mit einem entsprechenden Eingriffsabschnitt (8) einer ersten Außenfläche (12) des Endelements aufweist, um zu verhindern, dass die schützende Endkappe von dem Endelement gleitet.

2. Gliedermaßstab nach Anspruch 1, wobei die schützende Endkappe einen ersten Abschnitt (9) und einen zweiten Abschnitt (10) hat, wobei die Abschnitte im Wesentlichen parallel in Bezug aufeinander angeordnet und durch einen dritten Abschnitt (11) der schützenden Endkappe verbunden sind, und wobei der erste Abschnitt angeordnet ist, um gegen die erste Außenfläche des Endelements zu stoßen und mit dem Vorsprung bereitgestellt ist, der zweite Abschnitt angeordnet ist, um gegen eine zweite Außenfläche der gegenüberliegenden Seite des Endelements im Vergleich zu der ersten Außenfläche zu stoßen, und der dritte Abschnitt angeordnet ist, um die freie Endfläche (13) des Endelements abzudecken.

3. Gliedermaßstab nach Anspruch 1 oder 2, wobei die schützende Endkappe im Wesentlichen U- oder C-förmig ist.

4. Gliedermaßstab nach einem der vorhergehenden Ansprüche, wobei der Eingriffsabschnitt eine Aussparung ist, die auf der ersten Außenfläche bereitgestellt ist.

5. Gliedermaßstab nach Anspruch 2, wobei jede der ersten Außenfläche und der zweiten Außenfläche des Endelements mit einem niedrigeren Abschnitt (15; 15') für die Aufnahme der jeweils ersten und zweiten Abschnitte der schützenden Endkappe derart bereitgestellt ist, dass eine Lücke (16) zwischen der freien Endfläche des Endelements und dem dritten Abschnitt der schützenden Endkappe definiert ist.

6. Gliedermaßstab nach einem der vorhergehenden Ansprüche, wobei der Vorsprung elastisch in Bezug auf den Rest der schützenden Endkappe angeordnet ist.

7. Gliedermaßstab nach einem der vorhergehenden Ansprüche, wobei der Vorsprung durch eine nach innen gebogene Lasche bereitgestellt ist, die durch einen Schnitt in der schützenden Endkappe ausgebildet ist.

8. Gliedermaßstab nach einem der vorhergehenden Ansprüche, wobei der Vorsprung eine geneigte Fläche hat.

9. Gliedermaßstab nach einem der vorhergehenden Anspruche, wobei der zweite Endabschnitt mit der schützenden Endkappe abgeschrägte Kanten hat.

10. Gliedermaßstab nach einem der vorhergehenden Ansprüche, wobei die schützende Endkappe aus Metall besteht.

11. Gliedermaßstab nach einem der vorhergehenden Ansprüche, wobei die schützende Endkappe einen zweiten Vorsprung (7') in Schnappsitzeingriff mit einem entsprechenden zweiten Eingriffsabschnitt (8') einer zweiten Außenfläche (12') an der gegenüberliegenden Seite des Endelements im Vergleich zur ersten Außenfläche aufweist.

12. Gliedermaßstab nach Anspruch 1, wobei die schützende Endkappe aus Stahl besteht.

## Revendications

1. Règle pliable (1), comprenant un élément d'extrémité (2) avec une première partie d'extrémité (3) et une seconde partie d'extrémité (4) à l'opposé de la première partie extrémité, dans laquelle l'élément d'extrémité est en matière plastique, dans laquelle la première partie d'extrémité est liée à un autre élément (5) de la règle pliable et la seconde partie d'extrémité est fournie avec un capuchon d'extrémité protecteur (6), dans laquelle le capuchon d'extrémité protecteur inclut une protrusion (7) dans une mise prise par encliquetage avec une partie de mise en prise correspondante (8) de la première surface externe (12) de l'élément d'extrémité de façon à empêcher le capuchon d'extrémité protecteur de glisser de l'élément d'extrémité.

2. Règle pliable selon la revendication 1, dans laquelle le capuchon d'extrémité protecteur possède une première partie (9) et une seconde partie (10), dont les parties sont essentiellement agencées en parallèle les unes par rapport aux autres et jointes par une troisième partie (11) du capuchon d'extrémité protecteur, et dans laquelle la première partie est agencée pour venir buter contre ladite première surface externe de l'élément d'extrémité et est fournie avec la protrusion, la seconde partie est agencée pour venir buter contre une seconde surface externe au niveau du côté opposé de l'élément d'extrémité par rapport à ladite première surface externe, et la troisième partie est agencée pour couvrir la face frontale libre (13) de l'élément d'extrémité.

3. Règle pliable selon la revendication 1 ou la revendication 2, dans laquelle le capuchon d'extrémité protecteur est essentiellement en forme de U ou en forme de C.

4. Règle pliable selon l'une quelconque des revendications précédentes, dans laquelle la partie de mise en prise consiste en un renfoncement fourni sur ladite première surface externe.

5. Règle pliable selon la revendication 2, dans laquelle chacune de ladite première surface externe et de ladite seconde surface externe de l'élément d'extrémité est fournie avec une partie inférieure (15 ; 15') permettant d'accommoder les première et seconde parties du capuchon d'extrémité protecteur, respectivement, de sorte qu'un écart (16) entre la face frontale libre et l'élément d'extrémité et la troisième partie du capuchon d'extrémité protecteur soit défini.

6. Règle pliable selon l'une quelconque des revendications précédentes, dans laquelle la protrusion est agencée de manière résistante par rapport au reste du capuchon d'extrémité protecteur.

7. Règle pliable selon l'une quelconque des revendications précédentes, dans laquelle la protrusion est fournie par une languette coudée vers l'avant formée par une entaille dans le capuchon d'extrémité protecteur.

8. Règle pliable selon l'une quelconque des revendications précédentes, dans laquelle la protrusion possède une surface inclinée.

9. Règle pliable selon l'une quelconque des revendications précédentes, dans laquelle la seconde partie d'extrémité fournie avec le capuchon d'extrémité protecteur possède des bords chanfreinés.

10. Règle pliable selon l'une quelconque des revendications précédentes, dans laquelle le capuchon d'extrémité protecteur est en métal.

11. Règle pliable selon l'une quelconque des revendications précédentes, dans laquelle le capuchon d'extrémité protecteur inclut une seconde protrusion (7') dans une mise en prise par encliquetage avec une seconde partie de mise en prise correspondante (8') d'une seconde surface externe (12') au niveau du côté opposé de l'élément d'extrémité par rapport à ladite première surface externe.

12. Règle pliable selon la revendication 1, dans laquelle le capuchon d'extrémité protecteur est en acier.
